# FASCICULE DE BREVET EUROPEEN

(11) **EP 0 524 875 B1**
(45) Date de publication et mention de la délivrance du brevet: **18.10.1995**
(21) Numéro de dépôt: 92402109.0
(22) Date de dépôt: 22.07.1992
(51) Int. Cl.: F02K 1/76, F15B 13/02, F15B 15/20

(54) **Inverseur de poussée de turboréacteur muni d'un dispositif de sécurité intégré au système de commande hydraulique**
Schubumkehrvorrichtung für einen Strahlmotor mit hydraulischer Betätitungseinrichtung mit integrierter Sicherheitseinrichtung
Thrust reverser for an aircraft jet engine with hydraulic actuation system with integrated security device

(30) Priorité: 24.07.1991 FR 9109370
(43) Date de publication de la demande: 27.01.1993
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Halin, Yves Robert, F-91250 St Germain les Corbeil (FR)

(56) Documents cités:
- EP-A- 0 049 200
- BE-A- 557 040
- FR-A- 1 291 936
- FR-A- 1 565 504
- US-A- 3 002 497
- US-A- 3 442 178
- PATENT ABSTRACTS OF JAPAN vol. 7, no. 221 (M-246)(1366) 30 Septembre 1983 & JP-A-58 113 611 ( HITACHI ) 6 juillet

## Description

La présente invention concerne un inverseur de poussée de turboréacteur à double flux muni d'un dispositif de sécurité intégré au système de commande hydraulique.

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

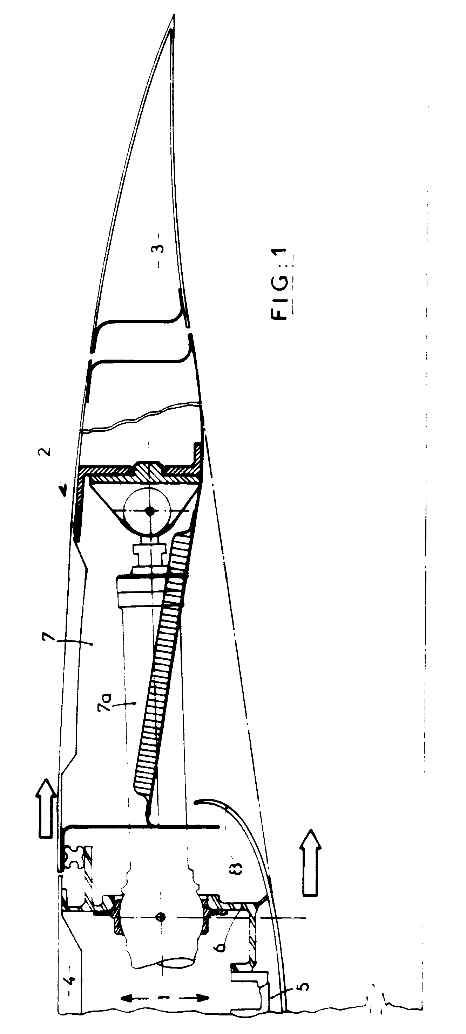

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Le dit cadre 6 sert également de support au dispositif de commandes des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

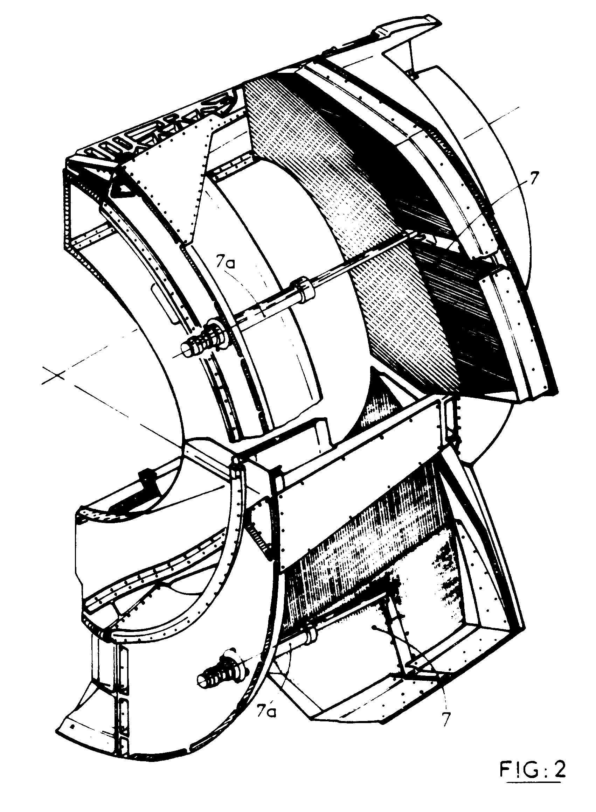

La figure 2 montre, selon une vue schématique partielle en perspective un exemple d'application d'un tel inverseur de poussée à un turboréacteur à double flux, l'inverseur comportant dans ce cas quatres portes 7 dont deux sont visibles sur la figure 2 et sont montrées ouvertes, correspondant à un fonctionnement en inversion de poussée. Chaque porte 7 est associée à un moyen de commande des déplacements tel qu'un vérin 7a.

Des exemples de réalisation de ce type d'inverseur de poussée de turboréacteur à portes basculantes sont décrits notamment par FR-A-2 618 853, FR-A-2 618 852, FR-A-2 621 082, FR-A-2 627 807, FR-A-2 634 251, FR-A-2 638 207 et FR-A-2 651 021 dont est titulaire la Société HISPANO-SUIZA.

On connaît par ailleurs les problèmes graves que pose un déplacement intempestif de la partie mobile d'un inverseur de poussée entraînant notamment un enclenchement accidentel de l'inversion. Plusieurs dispositions pour éviter des risques d'accident ont été prévues sur les matériels existants. Notamment, les portes d'inverseur de poussée sont munies, d'une part, d'un verrou mécanique sur la structure de support et, d'autre part, d'un autre verrou mécanique placé au niveau du vérin de commande. Cette double sécurité peut toutefois dans certaines applications, notamment lorsque les portes sont fortement engageantes vers la position déployée en inversion de jet, s'avérer insuffisante pour éviter tout risque et se garantir contre des pannes concomittantes.

Un exemple de dispositif de commande hydraulique d'inverseur de poussée est décrit par FR-A-2 435 604 et un exemple de verrouillage mécanique et détection associée est décrit par FR-A-2 488 335. Aucune de ces solutions connues n'est cependant totalement satisfaisante.

Par ailleurs, FR-A-1 291 936 décrit un mécanisme de commande hydraulique de verrouillage pour les portes d'un inverseur de poussée installé sur un moteur de propulsion à réaction. Il s'agit dans ce cas d'un appareil de verrouillage adjoint au système de commande.

Un inverseur de poussée de turboréacteur du type précité dans lequel le circuit hydraulique d'alimentation du vérin comporte un clapet anti-retour laissant passer le fluide sous haute-pression vers une première chambre du verin, dans un sens et bloquant le retour du fluide sous basse-pression à la sortie de la deuxième chambre du vérin, dans l'autre sens et répondant de manière satisfaisante aux conditions décrites ci-dessus est caractérisé en ce que le circuit hydraulique d'alimentation du vérin de commande de chaque porte d'inverseur comporte un dispositif complémentaire comportant un piston et un ressort d'appui susceptibles d'isoler le reste du circuit hydraulique de commande, par rapport au conduit d'alimentation de la deuxième chambre située du côté de la tige du vérin.

Cette isolation du circuit de commande peut en variante être obtenue par des dispositions intégrées au vérin de commande.

D'autres caractéristiques et avantages de l'invention seront mieux compris à la lecture de la description qui va suivre d'un mode de réalisation de l'invention, en référence aux dessins annexés sur lesquels :
- la figure 1 représente une demi-vue schématique en coupe longitudinale par un plan passant par l'axe de rotation d'un turboréacteur, d'un inverseur de poussée à portes pivotantes, en position fermée, d'un type connu et qui a fait précédemment l'objet d'une description ;
- la figure 2 représente une vue partielle en perspective de l'inverseur de poussée représenté à la figure 1, en position déployée ;
- la figure 3 représente un schéma simplifié du circuit hydraulique d'alimentation d'un vérin de commande de l'inverseur de poussé tel que représenté sur les figures 1 et 2 et réalisé conformément à l'invention ;
- la figure 4 représente un premier mode de réalisation d'un dispositif complémentaire adjoint au circuit conforme à l'invention de la figure 3 et permettant une limitation des surpressions pour un cas de fonctionnement;
- la figure 5 représente une disposition équivalente à celle qui est représentée sur la figure 4 selon un deuxième mode de réalisation intégrée au vérin de commande.

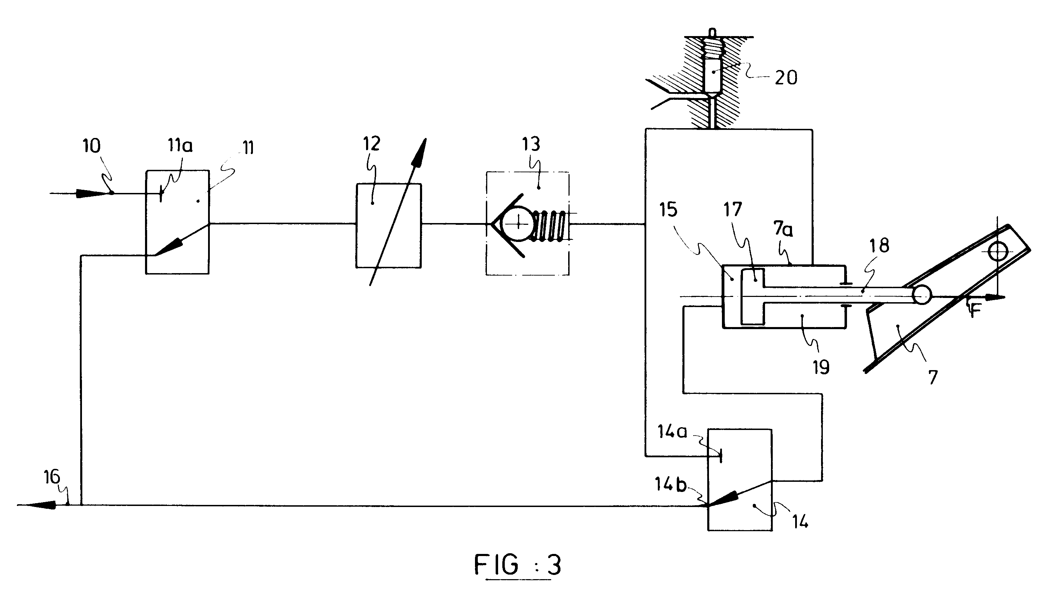

Comme noté précédemment, l'invention s'applique à un inverseur de poussée de tout type connu comportant au moins un élément déplaçable coopérant en position déployée à la production de l'inversion de poussée, lorsque les moyens de commande comportent au moins un vérin hydraulique. Selon un mode de réalisation de l'invention représenté sur la figure 3, le schéma simplifié du circuit d'alimentation d'un vérin de commande 7a d'un élément mobile de l'inverseur de poussée, constitué dans l'exemple représenté par une porte 7, montre une alimentation en fluide à haute pression dont l'arrivée est figurée en 10. L'alimentation passe par une vanne d'arrêt 11, représentée sur la figure 3 en position fermée, puis par un limiteur de débit 12. Conformément à l'invention, un clapet anti-retour 13 est intercalé sur le circuit hydraulique d'alimentation entre le vérin 7a et ledit limiteur de débit 12. Le circuit comporte en outre un sélecteur de position 14 à deux positions. Une première position 14a dudit sélecteur 14 relie l'alimentation en fluide sous haute-pression à la première chambre 15 du vérin 7a et la deuxième position 14b dudit sélecteur 14 relie ladite première chambre 15 du vérin 7a au circuit de retour à basse-pression 16.

Le fonctionnement se déduit de la description qui vient d'être donnée du système hydraulique de commande conforme à l'invention, en référence à la figure 3. Dans la position ouverte de la vanne 11, l'alimentation en fluide sous haute-pression, à partir de l'arrivée 3, par le passage assuré en 11a de la vanne 11, traverse le limiteur de débit 12 et le clapet anti-retour 13 pour passer en 14a à travers le sélecteur 14, vers la première chambre 15 du vérin 7a. Le piston 17 du vérin 7a est alors repoussé vers la droite dans le schéma de la figure 3 et la tige 18 du vérin 7a actionne la porte 7 dans le sens de l'ouverture, correspondant à la position déployée de l'inverseur de poussée qui dévie le flux secondaire fourni par le canal secondaire du turboréacteur dans l'exemple d'application représenté sur les figures 1 et 2, procurant une inversion de poussée. La position de ladite vanne d'arrêt 11 ainsi que celle du sélecteur 14 sont déterminées et commandées par l'équipage de l'appareil. L'action dudit limiteur de débit permet un réglage de la vitesse de déplacement des éléments mobiles de l'inverseur de poussée.

La position de fonctionnement en poussée directe correspondant à la circulation du flux secondaire telle que représentée sur la figure 1 est obtenue par l'admission du fluide sous haute-pression dans la deuxième chambre 19 du vérin 7a. Le piston 17 revient alors vers la gauche dans la position représentée sur le schéma de la figure 3 et la tige 18 du vérin 7a place la porte 7 de l'inverseur de poussée en position escamotée. Le sélecteur de position 14 est dans la position 14b, permettant au fluide de s'écouler de la première chambre 15 vers le retour à basse-pression 16.

Dans cette dernière configuration, en cas de défaillances simultanées des verrous mécaniques de blocage de la porte 7 d'inverseur et du vérin hydraulique 7a de commande des déplacements de porte, sous l'action d'un effort F exercé par la porte 7 sur la tige 18 du vérin 7a, il est nécessaire de bloquer tout mouvement du piston 17 du vérin 7a qui autoriserait le déploiement. L'accident est évité, grâce à l'invention, du fait que le volume de fluide hydraulique contenu dans la deuxième chambre 19 du vérin 7a ne peut s'écouler dans le circuit basse-pression du fait de l'arrêt imposé par le clapet anti-retour 13. Tout mouvement intempestif d'une partie mobile de l'inverseur de poussée telle que la porte 7 est ainsi interdit, ce qui procure la sécurité de fonctionnement et la sécurité de vol de l'appareil qui étaient recherchées.

Toutefois, certains déplacements manuels peuvent être demandés sur l'inverseur de poussée en différentes configurations, notamment lors d'opérations de maintenance. Dans ce but, un dispositif de purge 20 est adjoint sur le circuit hydraulique entre la deuxième chambre 19 du vérin 7a de commande des déplacements et le clapet anti-retour 13.

Afin d'éviter la formation de bulles d'air dans le circuit lors de la purge, ledit point de purge 20 est placé au point haut du circuit. Ledit dispositif de purge 20 peut être à commande manuelle ou relié à une télécommande, de manière connue en soi.

Dans le cas décrit ci-dessus de défaillance des verrous mécaniques de la porte 7, l'effort F exercé par la porte 7 sur la tige 18 du vérin 7a génère obligatoirement des pressions élevées dans la chambre 19 du vérin 7a ainsi que dans la partie du circuit hydraulique comprise entre le vérin 7a et le clapet anti-retour 13. En fonction des applications particulières, il s'avère avantageux d'adjoindre des dispositions protégeant les composants contre lesdites surpressions.

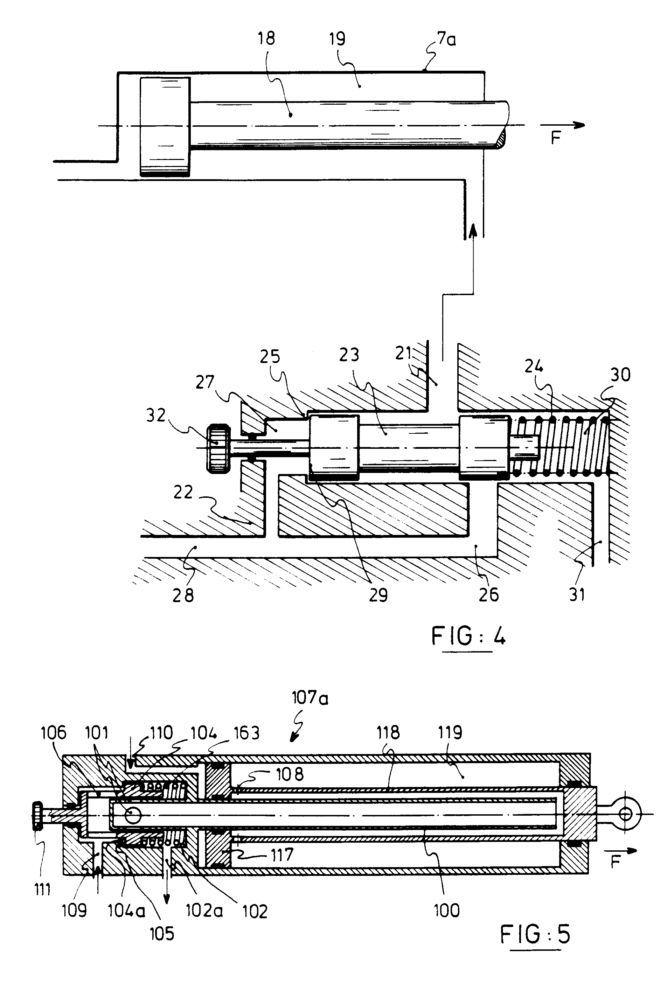

Le fonctionnement du système hydraulique de commande d'un inverseur de poussée prévoit dans tous les cas de commencer la séquence de mise en mouvement par l'ouverture de la vanne d'arrêt 11, ce qui entraîne la mise en pression de la chambre 19, située du côté de la tige du vérin 7a. Cette séquence est appliquée quel que soit le sens de commande de l'inverseur pour placer la porte 7 en position déployée ou en position escamotée.
Selon un premier mode de réalisation représenté sur la figure 4, un dispositif complémentaire est placé sur le conduit d'alimentation 21 de ladite chambre 19 du vérin 7a. Ce dispositif est constitué d'un corps 22 qui contient un piston de commande 23. Au repos, un ressort 24 repousse ledit piston 23 sur une butée 25, isolant le circuit 21 du côté vérin 7a du circuit 26 relié au bloc hydraulique de commande. En cas de déverrouillage mécanique accidentel de l'inverseur de poussée, la pression élevée de la chambre 19 ne va pas au-delà dudit piston 23 qui reste immobile. La tige 18 du vérin 7a ne se déplace pas sous l'effet de la force F à laquelle est soumis le vérin et le système hydraulique de commande est protégé contre la surpression de l'autre côté du dispositif 22.
Le fonctionnement normal est dans ce cas le suivant. Lorsque le bloc hydraulique de commande délivre une haute pression, la pression atteint la chambre 27 du dispositif 22 ainsi que les circuits 26 et 28 et s'applique sur la face 29 du piston 23. Par suite, le ressort 24 est comprimé et le piston 23 se déplace vers le fond de la cavité 30 qui est par ailleurs connectée à la pression basse de retour par un conduit 31. Ce déplacement du piston 23 permet la mise en communication des circuits 26 et 21 et par conséquent l'alimentation de la chambre 19 du vérin 7a par la pression de commande.

Une commande manuelle 32 permet la manoeuvre de l'inverseur de poussée en déplaçant le piston 23 durant les opérations de maintenance.

Dans un système de commande d'inverseur de poussée comportant plusieurs vérins 7a, le dispositif qui vient d'être décrit en référence à la figure 4 peut être placé dans un circuit hydraulique commun à tous les vérins ou un dispositif peut être propre à chaque vérin.
Selon un deuxième mode de réalisation réprésenté sur la figure 5, une disposition protégeant certaines parties du système hydraulique de commande d'un inverseur de poussée contre les surpressions, en cas de défaillance des verrouillages mécaniques des portes d'inverseur peut être intégrée au vérin de commande 107a. Dans ce cas, le piston 117 et la tige 118 du vérin coulissent sur une pièce tubulaire fixe 100 qui comporte des orifices 101 et délimite d'un côté, une chambre 119 de vérin où se déplace ledit piston 117 et de l'autre côté du vérin, une cavité 102 connectée en 102a sur le circuit à basse pression. Un ressort 103 placé dans ladite cavité 102 appuie sur un tiroir 104 et le maintient au repos sur une butée 105. Le tiroir 104 comporte des lumières 106. Dans la position de repos représentée sur la figure 4, les orifices 101 et les lumières 106 sont isolés. En outre, la tige 118 de vérin comporte des perçages 108. Les circuits hydrauliques de commande sont connectés sur le vérin 107a par des entrées 109 et 110. L'extrémité de la partie de pièce tubulaire 100 située à l'intérieur de la tige 118 est ouverte, tandis que l'extrémité de la partie située à l'intérieur du tiroir 104 est fermée.
Le fonctionnement dans ce cas est le suivant. La haute pression hydraulique entrant en 109 agit sur la face 104a du tiroir 104 qui comprime le ressort 103 et glisse vers le fond de la cavité 102. Par suite de ce déplacement du tiroir 104, les lumières 106 et les orifices 101 communiquent et la pression s'établit à l'intérieur de la pièce tubulaire 100, à l'intérieur de la tige 118 de vérin et à travers les perçages 108, à l'intérieur de la chambre 119 du vérin 107a.

Pour obtenir une action du vérin dans le sens inverse du précédent, l'alimentation du fluide hydraulique sous haute pression est dirigée sur l'entrée 110 de vérin. Comme dans le premier mode de réalisation, une commande manuelle 111 permet de déplacer le tiroir 104 durant les opérations de maintenance.
Le mode de réalisation conforme à l'invention du vérin 107a qui vient d'être décrit en référence à la figure 4 permet également de localiser la surpression dans le vérin lorsqu'un effort accidentel F s'exerce sur la tige de vérin 118 et de protéger ainsi contre la surpression les circuits et composants du système hydraulique de commande de l'inverseur de poussée.

## Revendications

1. Inverseur de poussée de turboréacteur à double flux comportant des portes pivotantes (7) susceptibles, en position fermée, de s'intégrer dans la paroi extérieure du canal annulaire du flux secondaire et, en position ouverte, de dévier le flux secondaire, chaque porte (7) étant associée à un dispositif de verrouillage et à un système hydraulique de commande comportant un vérin (7a), le circuit hydraulique d'alimentation du vérin comportant un clapet anti-retour (13) laissant passer le fluide sous haute-pression vers une première chambre (15) du vérin, dans un sens et bloquant le retour du fluide sous basse-pression à la sortie de la deuxième chambre (19) du vérin, dans l'autre sens, caractérisé en ce que le circuit hydraulique d'alimentation dudit vérin (7a) comporte un dispositif complémentaire comportant un piston (23) et un ressort d'appui (24) susceptibles d'isoler le reste du circuit hydraulique de commande, par rapport au conduit (21) d'alimentation de la deuxième chambre (19) située du côté de la tige du vérin (7a).

2. Inverseur de poussée de turboréacteur à double flux comportant des portes pivotantes (7) susceptibles, en position fermée, de s'intégrer dans la paroi extérieure du canal annulaire du flux secondaire et, en position ouverte, de dévier le flux secondaire, chaque porte (7) étant associée à un dispositif de verrouillage et à un système hydraulique de commande comportant un vérin (107a), le circuit hydraulique d'alimentation du vérin comportant un clapet anti-retour (13) laissant passer le fluide sous haute-pression vers une première chambre (15) du vérin, dans un sens et bloquant le retour du fluide sous basse-pression à la sortie de la deuxième chambre (19) du vérin, dans l'autre sens, caractérisé en ce que le vérin (107a) de commande comporte une pièce tubulaire interne fixe (100), percée d'orifices (101) au voisinage d'une extrémité fermée sur laquelle coulisse un tiroir (104) comportant des lumières (106) et associé à un ressort (103), le piston (117) et la tige (118) munie de perçages (108) coulissant sur la partie opposée de ladite pièce tubulaire (100) qui présente une extrémité ouverte et lesdites lumières (106) recevant le fluide hydraulique sous pression par une entrée (109) du vérin.

## Claims

1. A thrust reverser for a bypass turbojet engine the reverser having pivoting doors (7) adapted when closed to be incorporated in the outer wall of the annular secondary flow channel and when open to divert the secondary flow, each door (7) being associated with locking means and a hydraulic control system comprising an actuator (7a), the hydraulic supply circuit for the actuator comprising a check valve (13) which allows the high pressure fluid to flow to a first chamber (15) of the actuator in one direction and blocks the return of the low-pressure fluid at the outlet of the second chamber (19) of the actuator in the other direction, characterised in that the hydraulic supply circuit for the actuator (7a) comprises addtional means comprising a piston (23) and a compression spring (24) adapted to isolate the remainder of the hydraulic control circuit from the duct (21) which supplies the second chamber (19) disposed on the actuator rod side,

2. A thrust reverser for a bypass turbojet engine, the reverser having pivoting doors (7) adapted when closed to be incorporated in the outer wall of the annular secondary flow channel and when open to divert the secondary flow, each door (7) being associated with locking means and a hydraulic control system comprising an actuator (107a), the hydraulic supply circuit for the actuator comprising a check valve (13) which allows the high pressure fluid to flow to a first chamber (15) of the actuator in one direction and blocks the return of the low pressure fluid at the outlet of the second chamber (19) of the actuator in the other direction, characterised in that the actuator (107a) comprises a fixed internal tubular member (100) pierced with orifices 101) near a closed end, and a slide valve (104) which is formed with apertures (106) and is associated with a spring (103) sliding on said end of the tubular member (100), while the piston (117) and the rod (118), the latter being pierced with apertures (108), slide on the opposite part of the tubular member (100), the same being open at one end, the apertures (106) receiving the pressurised hydraulic fluid by way of an inlet (109) of the actuator.

## Patentansprüche

1. Schubumkehrvorrichtung für Zweikreis-TL-Triebwerke mit Schwenkklappen (7), die geeignet sind, sich bei Schließstellung in die Außenwand des ringförmigen Kanals des Sekundärstroms zu integrieren und bei offener Stellung den Sekundärstrom umzulenken, wobei jede Klappe (7) mit einer Verriegelungsvorrichtung und einem hydraulischen Steuersystem mit einem Zylinder (7a) verbunden ist, wobei der hydraulische Versorgungskreis des Zylinders ein Rückschlagventil (13) aufweist, das in einer Richtung die unter Hochdruck stehende Flüssigkeit zu einer ersten Kammer (15) des Zylinders fliessen läßt und in der anderen Richtung den Rückfluß der unter Niederdruck stehenden Flüssigkeit am Ausgang der zweiten Kammer (19) des Zylinders sperrt,
dadurch gekennzeichnet,
daß der hydraulische Versorgungskreis des genannten Zylinders (7a) eine Zusatzvorrichtung mit einem Kolben (23) und einer Andruckfeder (24) aufweist, die geeignet sind, den übrigen Teil des hydraulischen Steuerkreises gegenüber der Leitung (21) zur Versorgung der auf der Seite der Stange des Kolbens (7a) befindlichen zweiten Kammer (19) zu isolieren.

2. Schubumkehrvorrichtung für Zweikreis-TL-Triebwerke mit Schwenkklappen (7), die geeignet sind, sich bei Schließstellung in die Außenwand des ringförmigen Kanals des Sekundärstroms zu integrieren und bei offener Stellung den Sekundärstrom umzulenken, wobei jede Klappe (7) mit einer Verriegelungsvorrichtung und einem hydraulischen Steuersystem mit einem Zylinder (107a) verbunden ist, wobei der hydraulische Versorgungskreis des Zylinders ein Rückschlagventil (13) aufweist, das in einer Richtung die unter Hochdruck stehende Flüssigkeit zu einer ersten Kammer (15) des Zylinders fliessen läßt und in der anderen Richtung den Rückfluß der unter Niederdruck stehenden Flüssigkeit am Ausgang der zweiten Kammer (19) des Zylinders sperrt, dadurch gekennzeichnet, daß der Steuerzylinder (107a) ein feststehendes, rohrförmiges Innenstück (100) aufweist, durch das in der Nähe des einen geschlossenen Endes, auf dem ein Schieber (104) gleitet, der Durchlässe (106) aufweist und mit einer Feder (103) verbunden ist, Öffnungen (101) führen, wobei der Kolben (117) und die mit Bohrungen (108) versehene Stange (118) auf dem anderen Teil des genannten rohrförmigen Stücks (100) gleiten, der ein offenes Ende aufweist, und die genannten Durchlässe (106) die unter Druck stehende Hydraulikflüssigkeit durch einen Einlaß (109) des Zylinders aufnehmen.
